# EUROPEAN PATENT APPLICATION

(11) **EP 1 251 445 A2**
(43) Date of publication of application: **23.10.2002**
(21) Application number: 02008660.9
(22) Date of filing: 17.04.2002
(51) Int. Cl.: G06F 17/60

(54) **Personal information collection system**

(30) Priority: 19.04.2001 JP 2001120850
(71) Applicant: Pioneer Corporation, Meguro-ku, Tokyo (JP)
(72) Inventor: Nohara, Manabu, c/o Corporate Res. Dev. Lab., Tsurugashima-shi, Saitama 350-2288 (JP); Ichihara, Naohiko, c/o Corporate Res. Dev. Lab., Tsurugashima-shi, Saitama 350-2288 (JP)
(74) Representative: Betten & Resch

(57) **Abstract**

A system for collecting personal information concerning a customer by wireless communications between the customer's portable terminal and a store apparatus installed in a store. The terminal stores the customer's personal information, and sends the stored personal information to the store apparatus. The store apparatus discounts a price for the customer's purchased goods when it receives the personal information sent by the terminal, and stores the received personal information in a store device.

## Description

### BACKGROUND OF THE INVENTION

### 1. Field of the Invention

The present invention relates to a personal information collection system for collecting the personal information of customers.

### 2. Description of the Related Background Art

In a store such as a convenience store, information concerning sex, age, goods purchased, etc. of each customer is collected to make a database which has the collected information relating to each item. The database is utilized for future marketing activities such as product development and goods to be displayed. Such a store is equipped with a register that is connected to a central apparatus via a telephone line in order to collect personal information.

It is difficult for a store clerk to directly ask a customer, who has purchased goods, for the customer's personal information. In general, the store clerk must judge the sex and estimate the age of the customer based on his/her appearance in order to input the customer's data into the register. Therefore, the personal information input by the store clerk is far from accurate information. In addition, personal information consisting only of sex, age, and goods purchased is not sufficient for creating a useful database. If it were possible to collect more detailed and accurate personal information, including the customer's address, a personal information database which is valuable for marketing could be created.

### SUMMARY OF THE INVENTION

An object of the present invention is to provide a personal information collection system that can collect detailed and accurate personal information concerning customers.

According to the present invention, there is provided a customer personal information collection system for collecting personal information concerning a customer by communications between a terminal and a store apparatus, wherein the terminal comprises storage means for storing the customer's personal information, and sending means for sending the personal information stored in the storage means to the store apparatus, wherein the store apparatus comprises receiving means for receiving the personal information sent from the terminal, accounting means for discounting a price for the customer's purchased goods when the receiving means receives the personal information, and controlling means for storing the personal information received by the receiving means in a store device.

According to the present invention, there is provided a personal information collecting method for collecting personal information concerning a customer by communications between a terminal and a store apparatus, comprising the steps of: storing the customer's personal information in the terminal; sending the stored personal information from the terminal to the store apparatus; discounting a price for the customer's purchased goods when the store apparatus receives the personal information sent by the terminal; and storing the received personal information in a store device.

According to the present invention, there is provided a terminal having a function for performing communications with a store apparatus, comprising: receiving means for receiving personal information concerning a customer in accordance with an operating input; storage means for storing the personal information received by the receiving means; and sending means for sending the personal information stored in the storage means to the store apparatus at the time of electronic settlement.

According to the present invention, there is provided a store apparatus for collecting personal information concerning a customer by communications with a terminal, comprising: receiving means for receiving the personal information sent by the terminal; and accounting means for discounting a price for the customer's purchased goods when the personal information is received by the receiving means.

### BRIEF DESCRIPTION OF THE DRAWINGS

Fig. 1 is a block diagram of a personal information collection system according to the present invention;
Fig. 2 is a flowchart of a setting process for offering personal information;
Figs. 3A and 3B are examples of messages displayed on a terminal;
Fig. 4 shows an operating sequence of a POS register, a terminal, and a marketing analysis server; and
Figs. 5A and 5B are examples of messages displayed on the terminal.

### DETAILED DESCRIPTION OF THE PREFERRED EMBODIMENTS

An embodiment of the present invention will be described in detail below with reference to the accompanying drawings.

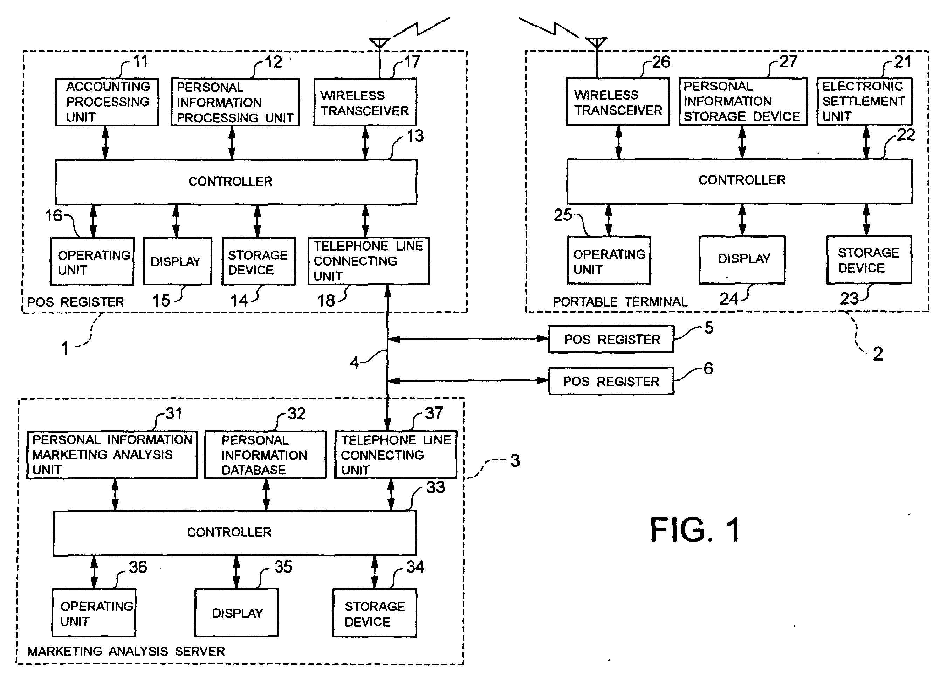

Fig. 1 is a block diagram of a personal information collection system according to the present invention. The personal information collection system comprises a POS register 1, which is a store apparatus to be installed in a store, a portable terminal 2, which is to be carried by the customer, and a marketing analysis server 3, which is used for marketing analysis. The POS register 1 and the terminal 2 are connected with each other by wireless communications. The POS register 1 is connected with the marketing analysis server 3 via a telephone line 4.

The POS register 1 comprises an accounting processing unit 11, a personal information processing unit 12, a controller 13, a storage device 14, a display 15, an operating unit 16, a wireless transmitter/receiver (transceiver) 17, and a telephone line connecting unit 18. The accounting processing unit 11 has an electronic settlement function, and is a main portion of the POS register 1 for accounting of purchased goods. The personal information processing unit 12 processes the customer's personal information. The controller 13 is connected to the accounting processing unit 11, the personal information processing unit 12, the storage device 14, the display 15, the operating unit 16, the wireless transceiver 17, and the telephone line connecting unit 18, and it controls the entire POS register 1. The display 15 displays the contents of processing received from each of the accounting processing unit 11 and the personal information processing unit 12, and the contents of operation received from the operating unit 16. The wireless transceiver 17 is a wireless communication device using Bluetooth technology. The telephone line connecting unit 18 is connected to the telephone line 4, and functions as an interface for communicating with the marketing analysis server 3.

The terminal 2 comprises an electronic settlement unit 21, a controller 22, a storage device 23, a display 24, an operating unit 25, a wireless transceiver 26, and a personal information storage device 27. The electronic settlement unit 21 controls electronic money for electronic settlement. The controller 22 is connected to the electronic settlement unit 21, the storage device 23, the display 24, the operating unit 25, and the wireless transceiver 26, and it controls the entire terminal 2. The storage device 23 temporarily stores data such as personal information while the controller 22 is operating. The wireless transceiver 26 is a wireless communication device using Bluetooth technology. Personal information concerning the customer who has the terminal 2 is stored in the personal information storage device 27.

The marketing analysis server 3 comprises a personal information marketing analysis unit 31, a personal information database 32, a controller 33, a storage device 34, a display 35, an operating unit 36, and a telephone line connecting unit 37. The controller 33 is connected to the personal information marketing analysis unit 31, the personal information database 32, the storage device 34, the display 35, the operating unit 36, and the telephone line connecting unit 37, and it controls the entire server 3. Personal information is stored to form a database in the personal information database 32. The personal information marketing analysis unit 31 performs marketing processing based on the personal information stored in the personal information database 32. The telephone line connecting unit 37 is connected to the telephone line 4, and functions as an interface for communicating with the POS register 1.

In addition to the POS register 1, POS registers 5, 6, etc., which are installed in other stores are connected to the telephone line 4. The configuration of the POS registers 5, 6, etc., is the same as that of the POS register 1.

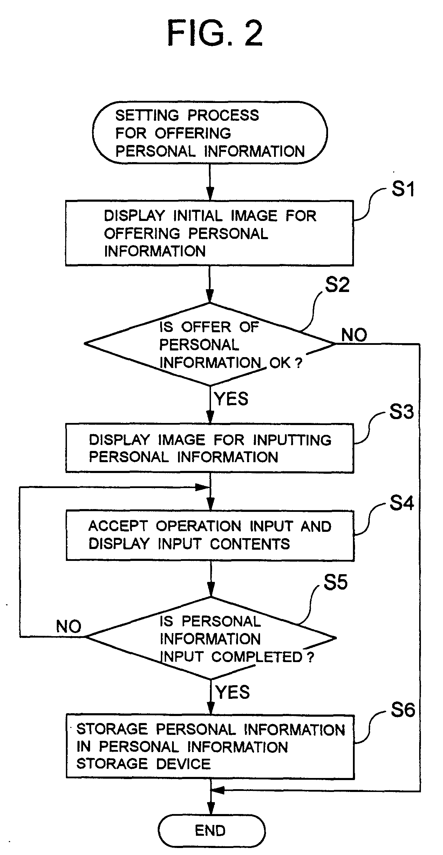

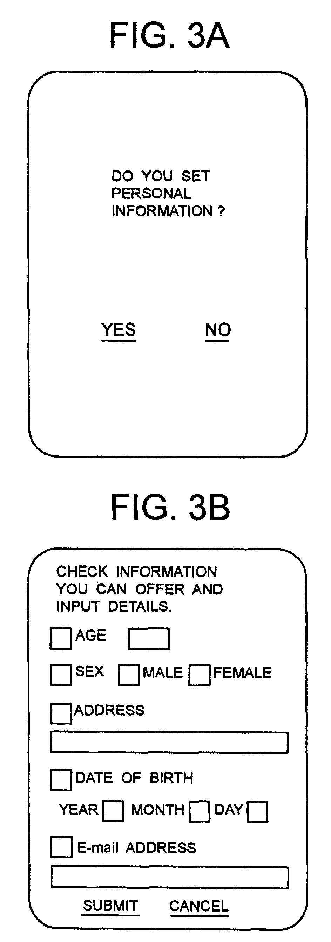

In a personal information collection system with the above configuration, a customer who has the terminal 2 performs a setting operation for offering the customer's personal information. In the setting operation, for example, personal information can be input and set by selecting items from a menu displayed on the terminal 2 by the customer operating the operating unit 25. In the personal information input process, as shown in Fig. 2, the controller 22 displays an initial image for personal information input on the display 24 (Step S1). The initial image, as shown in Fig. 3A, asks if the customer performs an operation for setting personal information. To answer this question, the customer selects YES or NO on the display screen with the cursor, then replies by operating an execute button (not shown) on the operating unit 25. The controller 22 determines whether or not the reply input is YES (Step S2). If the reply input is NO, the personal information setting operation is immediately ended, and the display on the display 24 returns to a standard image, for example. If the reply input is YES, the controller 22 displays a personal information input image on the display 24, as shown in Fig. 3B (Step S3), receives the results of operation input from the operating unit 25, and adds an additional display with the input contents to the personal information input image (Step S4).

The personal information input image contains check-boxes and spaces for each item of information consisting of customer's age, sex, address, date of birth, and e-mail address. The spaces are provided for inputting characters where necessary. The checkmarks and characters can be input by operating the operating unit 25. Putting a checkmark in the check-box for an item of personal information indicates that the item of personal information can be offered. Naturally, if a checkmark is put in the check-box for an item of personal information but no characters are input in the corresponding space, that item becomes an item of personal information that can not be offered.

The customer checks the items to be offered and then inputs the relevant personal information such as age using characters. When the operation is finished, the customer selects "Submit" on the display screen with the cursor and operates the execute button on the operating unit 25. By this operation, each item of personal information that has been input is accepted. The display screen returns to the standard image, and the input of personal information ends.

When the controller 22 detects that personal information input has ended (Step S5), it receives the personal information that has been input, that is, the personal information that the customer agreed to offer, as data, and stores the data in the personal information storage device 27 (Step S6).

The customer goes shopping, carrying the terminal 2 in which personal information has been input and set in the manner described above. When the customer carrying the terminal 2 goes shopping and approaches a store where the POS register 1, for example, is installed, a communication channel is set up between the wireless transceiver 17 and the wireless transceiver 26. That is, in wireless communications using Bluetooth technology, an inquiry by the wireless transceiver 17 is acknowledged by the wireless transceiver 26 to form a Piconet between the wireless transceiver 17 and the wireless transceiver 26. In this way, the POS register 1 becomes a master device and the terminal 2 becomes a slave device to enable the following wireless communications when the customer purchases goods.

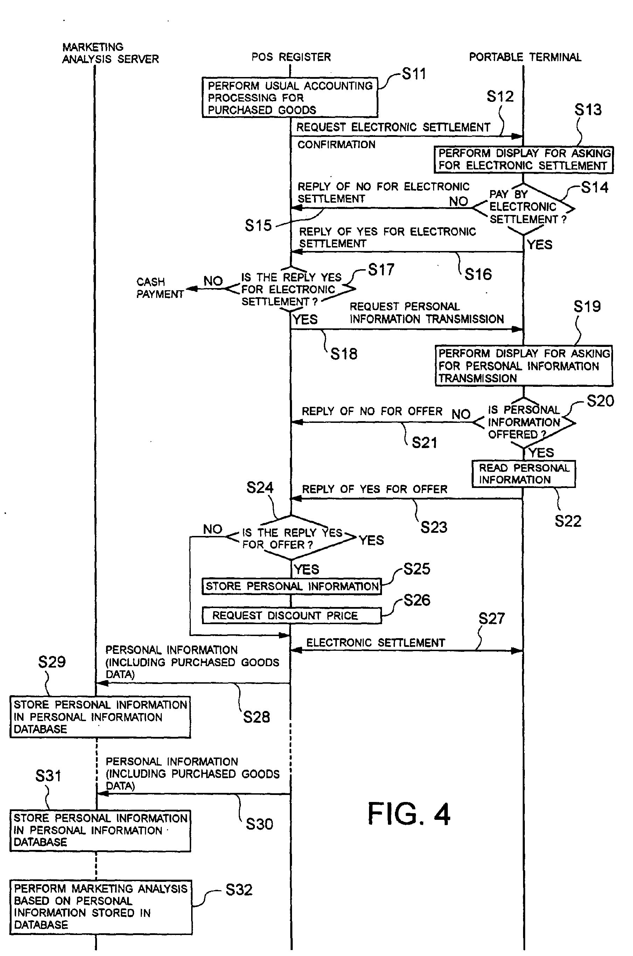

As shown in Fig. 4, the accounting processing unit 11 of the POS register 1 reads the bar codes of goods purchased by the customer, performs the usual accounting processing in accordance with the contents read, and calculates the total price including tax (Step S11). The controller 13 sends a request to the terminal 2 to confirm that electronic settlement for the purchased goods is to be performed (Step S12). The request for electronic settlement confirmation may contain detailed data indicating the price of each of the purchased goods, tax, and the total price. The request for electronic settlement confirmation is sent from the wireless transceiver 17 in the POS register 1.

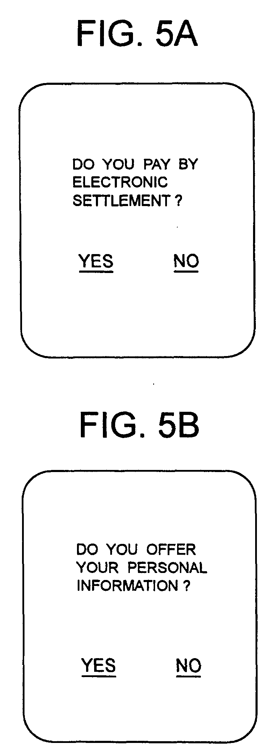

When the controller 22 of the terminal 2 receives the request for electronic settlement confirmation through the wireless transceiver 26, it displays an image on the display 24 asking the customer if electronic settlement should be performed (Step S13). When step S13 is executed, "YES" and "NO" as well as "DO YOU PAY BY ELECTRONIC SETTLEMENT?", for example, are displayed on the display 24, as shown in Fig. 5A. The customer selects YES or NO on the display screen with the cursor and sends the reply by operating the execute button on the operating unit 25. The controller 22 determines whether or not the customer's input is YES regarding the electronic settlement (Step S14). If the customer's input is NO, the controller 22 sends an electronic settlement NO response to the POS register 1 (Step S15). In this case, the controller 22 may return the image displayed on the display 24 to the standard image, for example, without performing any subsequent operation. In the case of a NO response to the electronic settlement, settlement is made in cash, for example. If the response is YES, an electronic settlement YES response is sent to the POS register 1 (Step S16). The electronic settlement NO response or the electronic settlement YES response is transmitted from the wireless transceiver 26.

When the controller 13 in the POS register 1 receives the response regarding the electronic settlement from the terminal 2 through the wireless transceiver 17 after step S12 is executed, it determines whether or not the response from the terminal is electronic settlement YES (Step S17). If the response is electronic settlement YES, the controller 13 issues a personal information transmission request to the terminal 2 (Step S18). The personal information transmission request is transmitted from the wireless transceiver 17 in the POS register 1.

When the controller 22 of the terminal 2 receives the personal information transmission request through the wireless transceiver 26, it displays an image on the display 24 asking the customer if his/her personal information should be offered (Step S19). When step S19 is executed, "YES" and "NO" as well as "DO YOU OFFER YOUR PERSONAL INFORMATION?", for example, are displayed on the display 24, as shown in Fig. 5B. The customer selects YES or NO on the display screen with the cursor and sends the reply to whether or not personal information should be offered by operating the execute button on the operating unit 25. The controller 22 determines whether or not the customer's input is YES regarding an offer of the personal information (Step S20). If the customer's input is NO, the controller 22 sends a NO response to the POS register 1 (Step S21). If the customer's input is YES, the controller 22 reads the personal information from the personal information storage device 27 (Step S22), and sends an YES response containing the personal information to the POS register 1 (Step S23). The NO response or the YES response is sent from the wireless transceiver 26.

When the controller 13 in the POS register 1 receives the response to the personal information transmission request from the terminal 2 through the wireless transceiver 17 after step S18 is executed, it determines whether or not it is the YES response (Step S24). If it is the YES response, the personal information contained in the YES response is stored in the storage device 14 (Step S25). The controller 13 then fetches the price that was calculated in step S11, applies a discount (Step S26), and then performs electronic settlement processing for the amount of money as a result of the discount (Step S27). If the response is NO, the controller 13 fetches the price calculated in step S11 and jumps to step S27 to perform electronic settlement processing for the full amount. In the electronic settlement processing, the controller 13 of the POS register 1 may obtain the amount of money from electronic money controlled by the electronic settlement unit 21 by wireless communications from the terminal 2, or may make an online request to the server (not shown) of a banking agency or a credit card company to withdraw the amount of money asked.

If the customer refuses to offer the personal information, the store clerk operating the POS register 1 may input the customer's personal information such as sex by judging it based on the customer's appearance through the operating unit 16 in the same manner as that of the conventional method.

The controller 13 of the POS register 1 sends the personal information to the marketing analysis server 3 after finishing the electronic settlement processing (Step S28). The personal information sent at this stage contains purchased goods data indicating the goods purchased by the customer who offered the personal information. The personal information is supplied to the marketing analysis server 3 via the telephone line connecting unit 18 and the telephone line 4.

When the personal information is received via the telephone line connecting unit 37, the controller 33 of the marketing analysis server 3 adds that personal information to the personal information database 32 for storing the received personal information (Step S29). That is, in the personal information database 32, the personal information and the purchased goods data are stored as a pair. When, as shown in step S30, new personal information is offered, the marketing analysis server 3 receives the new personal information and adds it to the personal information database 32 for storing the new personal information (Step S31).

The personal information marketing analysis unit 31 performs marketing analysis based on the personal information and the purchased goods data stored in the personal information database 32 (Step S32).

In the personal information collection system, a customer offers personal information and receives a discount on the price for the goods purchased. Compared with the conventional personal information collection process in which a store clerk inputs personal information such as sex judging from the customer's appearance through the operating unit, the personal information collection process according to the present invention has the advantage that comparatively precise personal information can be obtained because it is the customer who offers the personal information. Therefore, the database of the personal information collected in this way would be extremely helpful regarding future marketing such as product development and goods to be displayed.

The exemplary embodiment can use a cellular phone or PDA as the terminal 2. Also, a prepaid card or an IC card can be used as the terminal 2. Any item other than an initialized item can be added to the personal information input items and can be used instead of such an initialized item by downloading, etc.

As described above, according to the present invention, the detailed and accurate personal information of the purchaser of goods in a store can be collected.

## Claims

1. A customer personal information collection system for collecting personal information concerning a customer by communications between a terminal and a store apparatus,
wherein said terminal comprises storage means for storing the customer's personal information, and
sending means for sending the personal information stored in said storage means to said store apparatus,
wherein said store apparatus comprises receiving means for receiving the personal information sent from said terminal,
accounting means for discounting a price for the customer's purchased goods when said receiving means receives the personal information, and
controlling means for storing the personal information received by said receiving means in a store device.

2. A personal information collection system according to claim 1, wherein said terminal includes accepting means for accepting the customer's personal information in accordance with an operation input, and
saving means for saving the personal information accepted by said accepting means in said storage means.

3. A personal information collection system according to claim 2, wherein said accepting means accepts the customer's personal information so that the item of personal information sent by said sending means can be designated.

4. A personal information collection system according to claim 1, 2 or 3, wherein said controlling means adds the customer's purchased goods data to the customer's personal information and supplies the customer's personal information to said store device.

5. A personal information collection system according to one of claims 1 to 4, wherein said accounting means performs electronic settlement for the customer's purchased goods through said terminal.

6. A personal information collection system according to claim 4, wherein said store device includes database means for storing the personal information to form a database; and analyzing means for analyzing the personal information stored in said database means.

7. A personal information collection system according to claim 4, wherein said store device stores the personal information from said store apparatus and other store apparatuses.

8. A personal information collection system according to one of claims 1 to 7, wherein said store apparatus has a POS (point of sale) function.

9. A personal information collecting method for collecting personal information concerning a customer by communications between a terminal and a store apparatus, comprising the steps of:
storing the customer's personal information in said terminal;
sending said stored personal information from said terminal to said store apparatus;
discounting a price for the customer's purchased goods when said store apparatus receives the personal information sent by said terminal; and
storing the received personal information in a store device.

10. A terminal having a function for performing communications with a store apparatus, comprising:
receiving means for receiving personal information concerning a customer in accordance with an operating input;
storage means for storing the personal information received by said receiving means; and
sending means for sending the personal information stored in said storage means to said store apparatus at the time of electronic settlement.

11. A store apparatus for collecting personal information concerning a customer by communications with a terminal, comprising:
receiving means for receiving the personal information sent by said terminal; and
accounting means for discounting a price for the customer's purchased goods when the personal information is received by said receiving means.

12. A store apparatus according to claim 11, further comprising controlling means for storing the personal information received by said receiving means in a store device.
